# EUROPEAN PATENT APPLICATION

(11) **EP 1 182 899 A1**
(43) Date of publication of application: **27.02.2002**
(21) Application number: 00402358.6
(22) Date of filing: 24.08.2000
(51) Int. Cl.: H04Q 7/38, H04B 7/26

(54) **Rotating channel allocation in a TDMA-based radio communication system**

(71) Applicant: MOTOROLA, INC., Schaumburg, IL 60196 (US)
(72) Inventor: Fouilland, Pascal, Tournefeuille 31170 (FR); Abdesselem, Ouelid, Toulouse 31000 (FR); Desespringalle, Vincent, Mauzac 31410 (FR)
(74) Representative: Litchfield, Laura Marie

(57) **Abstract**

A radio access system for a radio communication system is disclosed, having a rotating control channel block with no idle blocks, resulting in an increase in spectrum usage efficiency especially for real-time traffic channels.

## Description

The present invention relates to a radio communication system, and in particular to the radio access system for a radio communication system.

### Background to the invention

Wireless communication systems require a radio access system to provide a wireless communication device (MS) with access to the fixed network infrastructure. The wireless communication device (MS) may be a mobile telephone, for example, but the use of the term MS herein is intended to include any wireless communication device.

Increasingly there is a demand from consumers for higher data rates to be made available by wireless communication systems than is available from existing wireless communication systems such as the Global System for Mobile communications (GSM system).

Previous generations of wireless communications systems have been based on a circuit switched principle, where during the set up of the call a dedicated path through the communication system is allocated to the call. However this method of allocation of resources is not efficient.

Currently wireless communication systems are being developed which are based on a packet-switched principle instead of a circuit-switched principle. In these new wireless communication systems data is transmitted over the wireless interface and through the network infrastructure in packets. The general name for these systems being developed is Enhanced General Packet Radio Service (EGPRS).

Although packet data is especially suitable for the transmission of data, it is also desired to provide Real Time (RT) channels in a packet based system which have acceptable time delay between successive packets to provide support for applications where the time delay between successive packets is critical. One such application is the transmission of speech, which has been termed Voice over IP (VoIP). A typical speech connection uses a full rate RT channel i.e. one complete timeslot over the radio interface.

One such wireless communication currently proposed is the Classic EGPRS system. This system has been designed to complement the existing GSM system by adding packet data capability to provide enhanced data rates. In a cell supporting Classic EGPRS a number of channels supporting packet data are provided. The base station of the cell broadcasts a Broadcast Control Channel (BCCH) on the primary carrier of the cell as specified in the existing GSM specification. The BCCH in a cell supporting packet data transfer carries inter alia information which enables a wireless communication device (MS) to find a traffic channel supporting packet data transfer in that cell.

In accordance with the GSM specification, a signal is transmitted continuously at maximum power on the BCCH carrier frequency to facilitate interference measurements by MS. For timeslots other than the timeslot allocated for transmission of the BCCH a dummy burst is transmitted.

This arrangement has the disadvantage that the continuous transmission on the BCCH carrier frequency at maximum power results in significant general network interference. In addition, the base station must be provided with a dedicated dummy burst unit, with a dedicated radio transmitter, to send dummy bursts at the BCCH frequency when the traffic bursts from the primary carrier are transmitted at another frequency. Furthermore, the BCCH and associated control channels use a complete time slot on which it is not possible to send any packet data even when no control information needs to be sent, resulting in sub-optimum network capacity.

The COMPACT EGPRS system has been proposed for use with small spectrum allocated to the channels. The COMPACT EGPRS system uses a Compact Packet Broadcast Control Channel (CPBCCH). In view of the spectrum restrictions cells are synchronised with each other when broadcasting control channels, including CPBCCH, on the same primary carrier frequency but in different timeslots. The timeslot allocated to transmission of control channels in each cell in the COMPACT EGPRS system is periodically rotated.

Although these mechanisms adopted for the COMPACT EGPRS system are very efficient for frequency re-use, system capacity of the COMPACT EGPRS system is reduced by the use of idle blocks and the control block rotation.

The present invention seeks to provide a radio communication system which alleviates at least some of these disadvantages.

For a better understanding of the present invention, and to show how it may be brought into effect, reference will now be made, by way of example, to the accompanying drawings, in which:
Figure 1 shows an exemplary radio communication system in accordance with an embodiment of the invention;
Figure 2 illustrates the rotation of the time-slot allocated to control channel information;
Figure 3 illustrates the rotation of the time-slot allocated to control channel information and three traffic channels;
Figure 4 illustrates timing of neighbour cell measurement by a low multi-slot class MS;
Figure 5 illustrates rotation of control channel and traffic channel time-slot allocation of different time-groups;
Figure 6 is a comparison of the time-slot which can be measured by a MS on a traffic channel in time group TG0 of Figure 5 with the time-slot on which a control channel is transmitted by a cell in time group TG3 of Figure 5.

A radio communication system in accordance with an embodiment of the present invention will now be described. The exemplary radio communication system will be explained in the context of the currently proposed EDGE EGPRS system. However, the invention is clearly not restricted to this system.

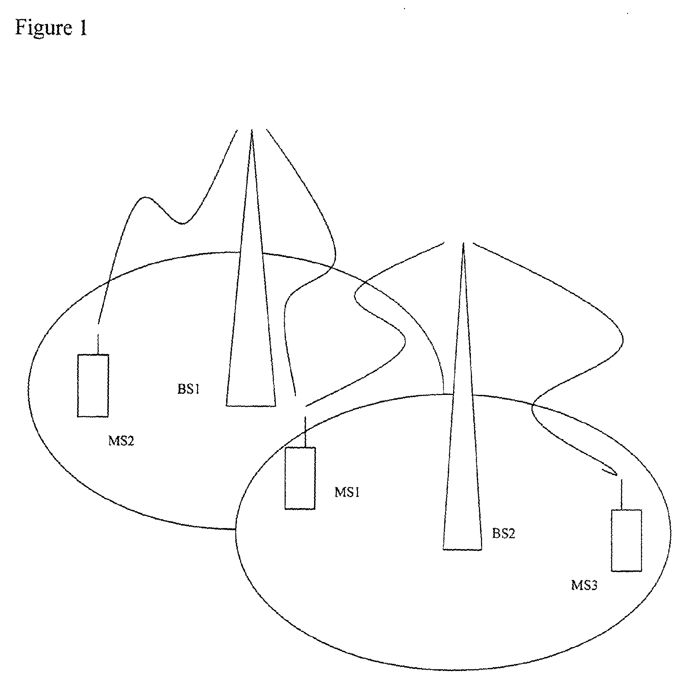

Figure 1 shows an exemplary radio communication system in accordance with an embodiment of the invention. Neighbouring cell base stations BS1 and BS2 transmit radio signals to, and receive radio signals from, wireless communication devices MS1 - MS3. As is clear from Figure 1, MS1 is able to receive signals from and transmit signals to BS1 and BS2. It will be understood that normally a wireless communication device will be able to receive signals from a number of base stations, but these have been omitted for clarity.

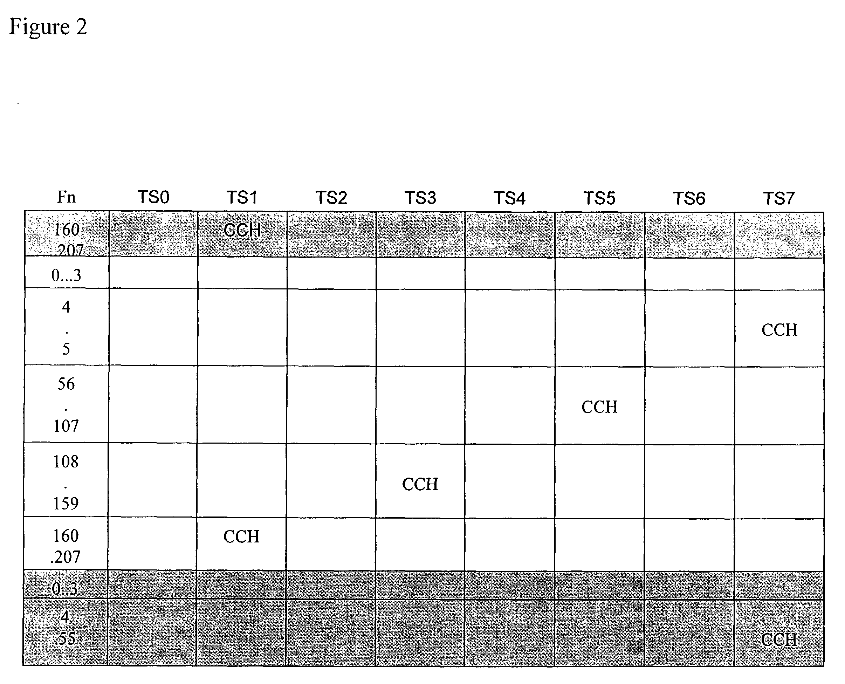

Figure 2 shows an exemplary illustration of the time-slot allocated for control channels on a carrier of a wireless communication system. This example is based on the multi-frame of the currently proposed EDGE EGPRS system. Thus, each multi-frame contains 52 frames (FN0-FN51) and each frame has eight time-slots (TS0-TS7).

The control channels are carried on an odd-numbered time-slot and the time-slot allocated to carry the control channel information rotates between the odd numbered time-slots. Thus, as is clearly shown in Figure 2, the time-slot allocated to the control channels completes a rotation after 4 whole multi-frames (i.e. 208 frames). As shown in Figure 2, the time-slot allocated to carry control channels is altered after the first block (comprising the first four frames FNO-FN3) in each frame; clearly, however, the time-slot allocation may be altered at any point in the multi-frame. Clearly, a multi-frame may carry more than one control channel. In addition, although not currently envisaged, more than one timeslot in each frame may be allocated to the same or to an additional control channel.

As will be readily understood by a skilled person, the illustrated rotation of the time-slot allocated to carry the control channel is only one of a number of possible rotations available to a skilled person. Further, a skilled person will understand that up to four separate time groups, each using the same sequence of time-slot allocations but offset by a single time-slot rotation, may be defined based on the rotation illustrated in Figure 2. Adjacent cells in a wireless communication system in accordance with the invention can be allocated different time groups.

In accordance with the described embodiment of the invention in each frame three odd-numbered timeslots, as well as all four of the even-numbered time-slots, are available to be allocated to carry a traffic channel. The availability of these additional traffic channels results in an increase in the capacity of the wireless communication network. Advantageously these traffic channels can be used as real-time traffic channels, for example to carry voice over IP (VOIP).

A traffic channel allocated to an even-numbered time-slot is unaffected by the rotation of the odd-numbered time slot allocated to control channels. The same timeslot in each of the twelve blocks (each block having four frames) of the multi-frame is used for each of these traffic channels.

However, the remaining traffic channels cannot simply be allocated to an odd-numbered time-slot because of the rotation of the control channels over the odd time-slots in successive multi-frames. Instead, the three traffic channels on odd-numbered time-slots (RT1-RT3) are allocated to a timeslot in accordance with the following allocation rule:

For each frame:
RT1 uses the lowest odd-numbered time-slot, excluding the one in which the control channel appears;
RT2 uses the second lowest odd-numbered time-slot, excluding the one in which the control channel appears;
RT3 uses the third lowest odd-numbered time-slot, excluding the one in which the control channel appears.

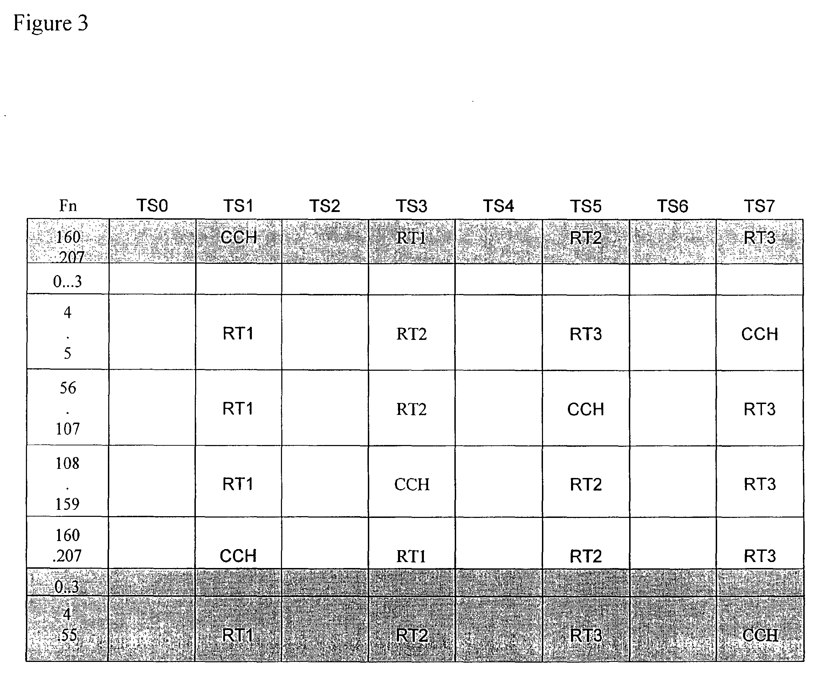

This allocation rule is clearly illustrated in Figure 3.

From a consideration of Figure 3 it is apparent that each of the three traffic channels RT1-RT3 is allocated to only two consecutive odd-numbered time-slots over the four multi-frames (i.e. 208 frames). Thus, for example, traffic channel RT1 is allocated to either time-slot TS1 or to time-slot TS3 and is never allocated to either time-slot TS5 or time-slot TS7, whereas traffic channel RT3 is allocated to either time-slot TS5 or time-slot TS7 and is never allocated to either time-slot TS1 or time-slot TS3.

This arrangement of the allocation of the traffic channels RT1-RT3 is advantageous because the requirement for a MS allocated any of traffic channels RT1-RT3 to change its time reference within the multi-frame is minimised. Thus, the allocation of traffic channel RT1 to a MS can be handled as an assignment of 3 consecutive timeslots (TS1, TS2, TS3) leading to a simplified implementation in the MS. In contrast if, for example, the traffic channels were allowed to follow the control channels and rotate over all odd-numbered time-slots, the MS time reference within each multi-frame would change between each successive pair of multi-frames, leading to a complex MS implementation.

Since a MS which is transmitting and/or receiving on an allocated traffic channel is able to make neighbour cell measurements only on a time-slot with a predetermined offset from the time-slot used by the MS the allocation of the traffic channels RT1-RT3 described above also advantageously enables the MS to make signal strength measurements on neighbouring cells in different time groups. If, in contrast, the rotation of the traffic channels followed the rotation of the control channels, the MS would be able to measure neighbour cell signal strength for cells in only one of the time groups.

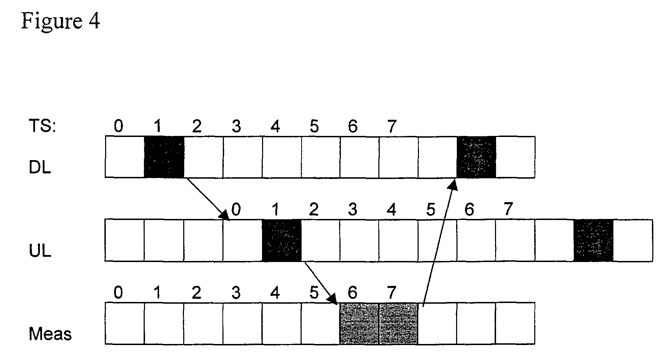

The measurement of neighbour cell signal strength by a MS will now be described in greater detail with reference to Figure 4, which illustrates timing of neighbour cell measurement by an exemplary multi-slot class 1 MS.

In GPRS and EGPRS a number of multi-slot classes have been defined for a MS. The multi-slot classes are defined by the maximum number of transmit and receive time-slots individually and in combination that may be allocated to a MS at one time. The configuration of time-slots available for each multi-slot class is limited to enable sufficient time to be allowed to make neighbour cell measurements.

Figure 4 shows a time-slot configuration for a class 1 (allocated 1 Rx (or downlink) time-slot and 1 Tx (or uplink ) time-slot) MS. This MS has been allocated time-slot TS1 on each of the downlink and uplink carriers. As is clear from Figure 4, this MS can measure neighbour cell signal strength for a cell transmitting control channels in time-slot TS7.

This result also holds true for all four possible time groups: namely that an MS allocated an odd time-slot (TS n) can measure a neighbour cell on the previous odd time-slot (TS n-2 modulo 8). In other words, if a MS uses blocks belonging to a time group N, the MS is unable to measure a neighbour cell using time group N-1 modulo 4. In view of this, the number of time groups used by the network in accordance with the embodiment of the present invention should advantageously be restricted to 2 time groups which are not adjacent to facilitate neighbour cell measurements.

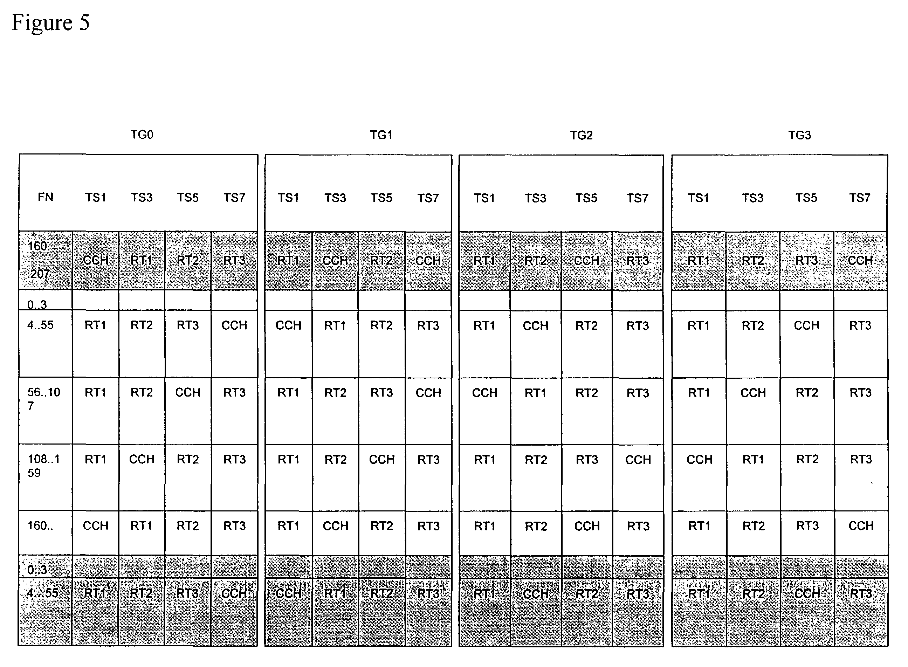

In order to illustrate the restriction in the number of time groups, reference is made to Figure 5 which shows rotation of control channel and traffic channel time-slot allocation in potential time-groups. Even numbered time-slots have been omitted for clarity. As will be apparent, the first time group TG0 in the first column of Figure 5 corresponds to the time group shown in Figure 3. The time-slot allocation for control channels for the remaining time groups TG1-TG3 is obtained by sequentially offsetting the control channel time-slot allocation for the first time group TG0 and the traffic channel time-slot allocation is obtained by applying the traffic channel allocation rules as set out above.

Taking time group TG0 as an example, it is clear that a MS allocated to any one of traffic channels RT1-RT3 cannot make neighbour cell measurements on a neighbouring cell in time group TG3.

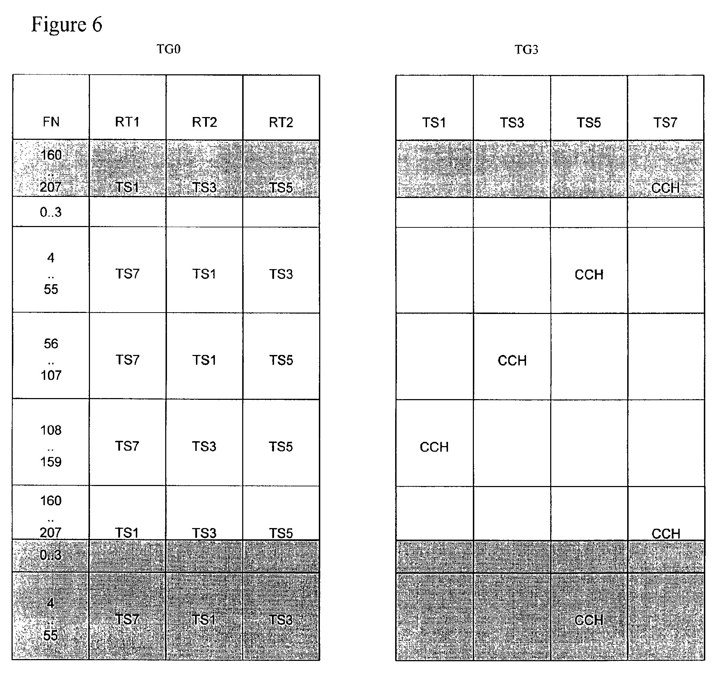

This may be better understood with reference to Figure 6 which is a comparison of the time-slot which can be measured by a MS on a traffic channel in time group TG0 of Figure 5 (i.e. the previous odd-numbered timeslot, as set out above) with the time-slot on which a control channel is transmitted by a cell in time group TG3 of Figure 5. As is clearly shown, at no time is a MS on any of traffic channels RT1-RT3 in a cell in time group TG0 able to make neighbour cell measurements for a cell in time group TG3.

This result can be replicated in respect of all four time groups shown and confirm that an MS on a cell having TGn cannot perform neighbour cell measurements for cells in adjacent time group TGn-1. Thus, preferably the number of time groups in the network should be reduced to two: either two odd or two even time groups.

Clearly, in order to minimise interference between adjacent cells, it is advantageous that adjacent cells use different carrier frequencies. However, if adjacent cells use the same carrier frequencies, interference could be minimised if the base station allocates traffic channels on the shared carrier to an MS close to the base station. In this case transmission power of the traffic blocks in odd timeslots is low and therefore will not give rise to interference at the cell boundaries with control channels being transmitted by adjacent cells.

It is clear from the above description that an advantageous radio communication system is provided by the present invention.

Since in accordance with the invention no idle blocks are defined the available spectrum is utilised most efficiently. In particular it should be noted that the invention enables 7 traffic channels plus at least one discontinuous control channel to be carried simultaneously, in the above example. Since the timeslot carrying the discontinuous control channel can carry (non-real time) packet data in the frames not used by the control channel, the present invention enables more than 7 time-slots out of the 8 timeslots available to be used to carry traffic data.

Typically, for example, 4 blocks (comprising 4 frames) out of 12 blocks available on a 52 frame multi-frame are used for control information, leaving 8 blocks available to carry packet data. Thus, in combination with the remaining 7 traffic channels enables use for packet data of 7.67 out of the 8 timeslots of the multi-frame. In contrast, with classic EGPRS at least one timeslot is used to carry the broadcast control channel so only a maximum of 7 time slots are available for traffic data. The use of idle blocks in the COMPACT EGPRS system as proposed reduces the data carrying capacity still further, leading typically to only 6.67 timeslots out of the 8 being available to carry traffic channels.

Although the described invention is particularly advantageous used on the primary carrier of a cell of a radio communication system carrying the packet broadcast control channel, it may advantageously be used in any multi-frame containing a control channel.

Since the timeslot allocated to the control channel changes in accordance with an advantageous embodiment, it is possible to provide real time traffic channels (ie traffic channels with an allocated timeslot in all or substantially all frames of the multi-frame) whilst enabling the wireless communication device to make neighbour cell measurements.

The restriction of the number of time groups to two non-adjacent time groups, in accordance with an advantageous embodiment, ensures that neighbour cell measurements can be made for all adjacent cells.

The different rotation laws of the timeslot allocated to the control channel and the traffic channels, in accordance with a preferred embodiment also facilitates neighbour cell measurements.

The different rotation law for the control channel and the traffic channels in accordance with the described embodiment is particularly advantageous as changes to the time reference of the wireless communication device within the frame are minimised.

## Claims

1. A radio communication system using a multi-frame signal, each frame of the multi-frame signal having a plurality of timeslots, wherein in at least one frame of a multi-frame containing a control channel the control channel is mapped to one of the plurality of time slots and traffic channels are mapped to the remaining slots.

2. A radio communication system as claimed in claim 1 wherein the at least one control channel is mapped to a sequence of different timeslots in successive multi-frames.

3. A radio communication system as claimed in claim 1 or 2 wherein the at least one control channel is mapped to the odd numbered timeslots in a pre-determined sequence in successive multi-frames.

4. A radio communication system as claimed in any preceding claim where the timeslot to which the at least one control channel, or an additional control channel, is mapped changes part way through a multi-frame.

5. A radio communication system as claimed in any preceding claim where each of the at least one traffic channel is allocated to a timeslot of the sequence of timeslots not occupied by the at least one control channel.

6. A radio communication system as claimed in any preceding claim wherein the sequence of time slots to which the at least one traffic channel is mapped is different from the sequence to which the at least one control channel is mapped.

7. A radio communication system as claimed in any preceding claim wherein the nth traffic channel is allocated the timeslot with the nth lowest timeslot number of the timeslots in the control channel timeslot sequence, other than the timeslot occupied by the at least one control channel.

8. A radio communication system as claimed in any preceding claim where the traffic channels carry packet data.

9. A radio communication system as claimed in any preceding claim where the traffic channels are real time channels.

10. A radio communications system as claimed in any preceding claim where the at least one control channel is a packet broadcast control channel.

11. A radio communication system as claimed in any preceding claim comprising a plurality of cells, wherein the cells are allocated to one of a plurality of time groups, the time groups having identical control channel timeslot sequences which are offset from one another.

12. A radio communication system as claimed in claim 11 wherein the control channel timeslot sequences comprise the odd-numbered timeslots.

13. A radio communication system as claimed in claim 11 or 12 where adjacent cells are allocated to different time groups.

14. A radio communication system as claimed in claim 11, 12 or 13 where adjacent cells are allocated to non-adjacent time groups.

15. Apparatus for use in a radio communication system as claimed in any preceding claim comprising:
means for transmitting control channel information on the at least one control channel; and
means for allocating one or more of the traffic channels for communication with a wireless communication device.
